# EUROPEAN PATENT APPLICATION

(11) **EP 3 025 860 A1**
(43) Date of publication of application: **01.06.2016**
(21) Application number: 14829964.7
(22) Date of filing: 17.06.2014
(51) Int. Cl.: B32B 17/10, B32B 27/00, C09D 5/16, C09D 7/12, H01L 31/048, C09D 183/02

(54) **WATER-BASED ANTI-SOILING AGENT, ANTI-SOILING LAYER, LAYERED BODY, AND SOLAR BATTERY MODULE**

(30) Priority: 24.07.2013 JP 2013153749
(71) Applicant: FUJI-FILM Corporation, Minato-ku Tokyo 106-8620 (JP)
(72) Inventor: KANEIWA Hideki, Fujinomiya-shi Shizuoka 418-8666 (JP)
(74) Representative: Hoffmann Eitle
(86) International application number: PCT/JP2014/065991
(87) International publication number: WO 2015/012021

(57) **Abstract**

An object of the invention is to provide a coating layer that can suppress the attachment of contaminants at the time of fine weather or drying, in addition to the ability to be cleaned by washing with water. The invention relates to a water-based anti-soiling agent including, in a mixed manner, a siloxane oligomer expressed by General Formula (1) below; a water component; an antistatic agent; and silica fine particles, in which a component exhibiting surface activity is 0.01% by mass or greater is included in the water-based anti-soiling agent, and in General Formula (1), each of R¹ to R³ independently represents an organic group having 1 to 6 carbon atoms, R⁴ represents an alkyl group having 1 to 6 carbon atoms, and n represents an integer of 2 to 20.

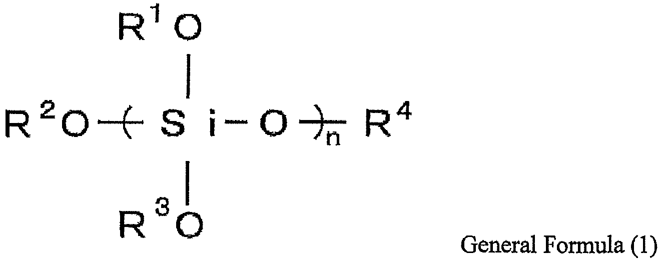

## Description

### BACKGROUND OF THE INVENTION

### 1. Field of the Invention

The invention relates to a water-based anti-soiling agent, an anti-soiling coating layer, and a solar battery module. Specifically, the invention relates to a water-based anti-soiling agent for forming an anti-soiling coating layer in order to protect a surface of a solar battery module. The anti-soiling coating layer that is formed by using this water-based anti-soiling agent is preferably used as a surface protecting material of a solar battery module.

### 2. Description of the Related Art

Since the solar battery is a power generation system that does not discharge carbon dioxide at the time of power generation and has stall environmental impact, the spread thereof has rapidly advanced recently. The solar battery module has a structure in which a solar battery cell in which a solar battery element is sealed with a sealing material is interposed between a surface protecting material which is disposed on a light receiving surface side (surface side) to which the sunlight is generally incident and a base material (so-called back sheet) disposed on the opposite side (back surface side) of the light receiving surface side to which the sunlight is incident.

A light receiving surface of a solar battery is generally protected by a surface protecting material made of glass or a weather resistant resin film. The light receiving surface of the solar battery is a surface to which the sunlight is incident, and thus the surface protecting material provided on the light receiving surface side is required to have high light transmitting ability. In addition, the surface protecting material provided on the light receiving surface is exposed to the outdoor environment in many cases, and thus is required to have high weather resistance. Meanwhile, there is a problem in that the surface protecting material of the solar battery is easily influenced by large dust or smoke in the atmosphere and contaminants are easily attached. Light transmittance decreases in the surface protecting material to which contaminants are attached, energy conversion efficiency of the solar battery is adversely affected, and thus the contaminants become a problem.

In order to resolve the attachment of these contaminants, JP2006-52352A discloses a hydrophilic film having high hydrophilicity and an aqueous hydrophilization treatment agent for forming this film. Here, it is suggested to wash off the attached contaminants with water by providing a hydrophilic film on a surface of an article provided outdoors.

### SUMMARY OF THE INVENTION

As described above, in the surface protecting material in the related art, as disclosed in JP2006-52352A, the attached contaminants can be removed by washing off the contaminants with water. However, there is a problem in that, there is no means for removing contaminants at the time of fine weather or drying, and contaminants accumulate if there is no rain. As described above, if the contaminants accumulate, the contaminants become a problem since light transmittance becomes worse and the energy conversion efficiency of the solar battery is adversely affected.

Therefore, in order to solve the problems in the related art, the present inventors proceed with the examination for the purpose of providing an anti-soiling coating layer that can suppress the attachment of contaminants at the time of fine weather or drying, in addition to having the ability to be cleaned by washing with water and a water-based anti-soiling agent that can form this anti-soiling coating layer.

As a result of diligent examination in order to solve the problem described above, the present inventors have found that an anti-soiling coating layer having both excellent ability to be cleaned by washing with water and anti-soiling properties can be formed by obtaining a water-based anti-soiling agent which has an antistatic agent and in which the content of the component indicating the surface activity included in the water-based anti-soiling agent is a certain amount or greater. Further, the present inventors have found that, in the solar battery module provided with this anti-soiling coating layer, light transmittance of the surface does not decrease, and the energy conversion efficiency of the solar battery is maintained to be in a satisfactory state, for a long period of time, so as to complete the invention.

Specifically, the invention has the following configurations.
[1] A water-based anti-soiling agent comprising, in a mixed manner: a siloxane oligomer expressed by General Formula (1) below; a water component; an antistatic agent; and silica fine particles, in which a component exhibiting surface activity is 0.01% by mass or greater is included in the water-based anti-soiling agent, and 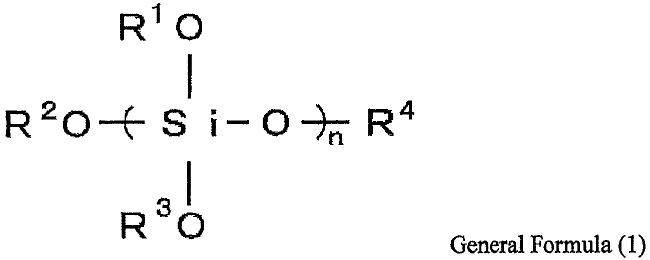 in which, in General Formula (1), each of R¹ to R⁴ independently represents an organic group having 1 to 6 carbon atoms, and n represents an integer of 2 to 20.
[2] The water-based anti-soiling agent according to [1], further including: a catalyst that promotes condensation of a siloxane oligomer.
[3] The water-based anti-soiling agent according to [1] or [2], further including: a component exhibiting ionic surface activity.
[4] The water-based anti-soiling agent according to any one of [1] to [3], further including: a component exhibiting nonionic surface activity.
[5] The water-based anti-soiling agent according to [3] or [4], in which a content of the component exhibiting ionic surface activity is 1.0% by mass or less with respect to a total mass of the water-based anti-soiling agent.
[6] The water-based anti-soiling agent according to any one of [1] to [5], in which the antistatic agent includes metal oxide fine particles.
[7] The water-based anti-soiling agent according to any one of [1] to [6], in which a ratio of carbon in a total solid content in the water-based anti-soiling agent is 3% by mass or less.
[8] The water-based anti-soiling agent according to [6] or [7], in which a primary particle diameter of metal oxide fine particles is 100 nm or less.
[9] The water-based anti-soiling agent according to any one of [1] to [8], in which a content of an organic compound having a molecular weight of 1,100 or greater included in the water-based anti-soiling agent is 0.2% by mass or less.
[10] An anti-soiling coating layer that is formed by coating and drying the water-based anti-soiling agent according to any one of [1] to [9].
[11] The anti-soiling coating layer according to [10], in which a surface electrical resistance is 1 × 10¹² ω/square or less.
[12] The anti-soiling coating layer according to [10] or [11], in which a water contact angle on a surface is 40° or less.
[13] The anti-soiling coating layer according to any one of [10] to [12], in which an average integrating sphere transmittance in a wavelength of 300 nm to 1,200 nm is 95% or greater.
[14] A layered body obtained by laminating the anti-soiling coating layer according to any one of [10] to [13], as a glass layer.
[15] A solar battery module having a layered body according to [14].

If the water-based anti-soiling agent according to the invention is used, it is possible to obtain an anti-soiling coating layer having both excellent ability to be cleaned by washing with water and the anti-soiling properties. That is, if a water-based anti-soiling agent according to the invention is used, it is possible to obtain an anti-soiling coating layer from which contaminants are easily washed away by rainwater at the time of rainy weather and to which the attachment of contaminants is suppressed at the time of fine weather or drying. The anti-soiling coating layer that can be obtained in this manner is preferably used as surfaces of various base materials and particularly as an anti-soiling layer of a solar battery surface protecting material.

### DESCRIPTION OF THE PREFERRED EMBODIMENTS

Hereinafter, the invention is described in detail. The descriptions of constituent elements described below are provided based on representative embodiments and specific examples, but the invention is not limited thereto. In addition, in this specification, numerical values indicated using the expression "to" mean a range including the numerical values indicated before and after the expression "to" as a lower limit and an upper limit.

### (Water-based anti-soiling agent)

The invention relates to a water-based anti-soiling agent obtained by mixing a siloxane oligomer expressed by General Formula (1) below, a water component, an antistatic agent, and silica fine particles. Here, 0.01% by mass or greater of a component exhibiting surface activity is included in the water-based anti-soiling agent. According to the invention, a coating layer having abundant antistatic properties and abundant hydrophilic properties can be formed on the surface of target base material by using this water-based anti-soiling agent. Accordingly, an anti-soiling coating layer having both the ability to be cleaned by washing with water and anti-soiling properties (stain attachment resistance) can be obtained.

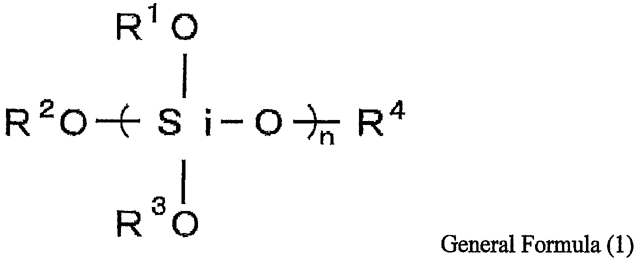

Here, in General Formula (1), each of R¹ to R⁴ independently represents an organic group having 1 to 6 carbon atoms. In addition, n represents an integer of 2 to 20.

In General Formula (1), each of R¹ to R⁴ independently represents an organic group having 1 to 6 carbon atoms. In addition, R¹ to R⁴ may be identical to or different from each other. In addition, R¹ to R⁴ may have straight chain shapes or may be have branches. The organic groups represented by R¹ to R⁴ each are preferably an alkyl group having 1 to 6 carbon atoms, and examples of the alkyl group represented by R¹ to R⁴ include a methyl group, an ethyl group, a propyl group, an isopropyl group, an n-butyl group, a tert-butyl group, an n-pentyl group, an n-hexyl group, and a cyclohexyl group. According to the invention, if the alkyl group represented by R¹ to R⁴ has 1 to 6 carbon atoms, hydrolyzability of the siloxane oligomer can be enhanced. In addition, in view of ease of hydrolyzability, an alkyl group having 1 to 4 carbon atoms is more preferable, and an alkyl group having 1 or 2 carbon atoms is particularly preferable.

In General Formula (1), n represents an integer of 2 to 20. If n is in the range described above, the viscosity of the solution including a hydrolysate can be in an appropriate range, and also the reactivity of the siloxane oligomer can be controlled to be in a preferable range. In addition, if n exceeds 20, viscosity of a hydrolysate solution becomes too high, and handling tends to become difficult. Meanwhile, if n is 1, the control of the reactivity of the alkoxysilane tends to become difficult, and thus it is difficult to obtain an anti-soiling coating layer having an appropriate hydrophilic group after coating. n may be 2 to 20, preferably 3 to 15, and more preferably 5 to 10.

The siloxane oligomer used in the invention is mixed with a water component, such that at least a portion thereof is hydrolyzed. The hydrolysate of this siloxane oligomer can be obtained by reacting a siloxane oligomer with a water component and changing an alkoxy group bonded to silicon to a hydroxyl group. Not all alkoxy groups have to react at the time of hydrolyzation, but it is preferable that many alkoxy groups are hydrolyzed, in order to cause the coating agent to exhibit hydrophilicity after coating. In addition, at the time of hydrolyzation, a minimum amount of the water component is the same molar amount of the alkoxy group of the siloxane oligomer. However, it is preferable that a greatly excessive amount of water exists in order for the reaction to smoothly proceed.

This hydrolyzable reaction proceeds at room temperature, but heating may be performed in order to promote the reaction. In addition, it is preferable that reaction time is long, since the reaction proceeds. In addition, under the existence of the catalyst described below, it is possible to obtain a hydrolysate about half a day.

In addition, hydrolyzable reaction is a reversible reaction, and, if water is removed from a system, a hydrolysate of a siloxane oligomer initiates condensation between hydroxyl groups. Accordingly, if an aqueous solution of a hydrolysate is obtained by reacting greatly excessive water with a siloxane oligomer, it is preferable that the aqueous solution as it is, without forcibly separating the hydrolysate, is used as a raw material of the coating agent.

The water-based anti-soiling agent according to the invention has a water component as a main solvent. If the water component is used as a solvent, it is possible to reduce the load to the health of an operator at the time of handling and the load to the environment, and also it is possible to prevent the condensation in the liquid while the hydrolysate of the siloxane oligomer is preserved.

In addition, the water component used in the invention includes water as a main component, and preferably includes 30% by mass or greater of water, and more preferably includes 40% by mass or greater of water. In addition, the water component may contain an organic solvent or a compound in addition to water. For example, a hydrophilic organic solvent may be included. If the hydrophilic organic solvent is included, it is possible to obtain the effect in that even coating becomes possible due to a reduction in surface tension, a ratio of the solvent having a low boiling point becomes high, or the like, and thus drying becomes easy. The hydrophilic organic solvent is not particularly limited, but examples thereof include methanol, ethanol, isopropanol, butanol, acetone, ethylene glycol, and ethyl cellosolve. In view of environmental impact or effects on the health of an operator, alcohols are preferable, ethanol or isopropanol is more preferable.

The ratio of the solid content mass with respect to a total mass of the water-based anti-soiling agent according to the invention is preferably 0.1 to 30%, more preferably 0.2 to 20%, and still more preferably 0.5 to 10%.

In addition, the content of the siloxane oligomer is preferably 3 to 70% by mass, more preferably 5 to 60% by mass, and still more preferably 10 to 50% by mass with respect to a total solid content mass of the water-based anti-soiling agent. If the content of the siloxane oligomer is in the range described above, it is possible to form an anti-soiling coating layer having appropriate solidity and durability.

### (Antistatic agent)

The water-based anti-soiling agent according to the invention has an antistatic agent. The antistatic agent suppresses the attachment of the contaminants by providing antistatic properties to the anti-soiling coating layer. Examples of the antistatic agent for providing antistatic properties include an ionic surfactant or metal oxide fine particles. As the antistatic agent, any one of an ionic surfactant or metal oxide fine particles may be used, or two or more types thereof may be used in mixture.

Since an ionic surfactant has properties of being segregated and acting near an outermost surface of the coating agent after coating, the effect can be exhibited by adding a smaller amount of the ionic surfactant. Meanwhile, a relatively greater amount of the metal oxide fine particles has to be added in order to apply antistatic properties. However, the metal oxide fine particles are an inorganic substance, and thus it is possible to increase durability of the anti-soiling coating layer.

Examples of the ionic surfactant include an anionic surfactant such as an alkyl sulfate salt, an alkylbenzene sulfonate salt, and an alkyl phosphate salt, a cationic surfactant such as alkyltrimethylammonium salts and dialkyldimethylammonium salts, and an amphoteric type surfactant such as alkylcarboxybetaine.

In addition, if the ionic surfactant is excessively added, it is known that the amount of electrolytes in a system increases, and thus the condensation of silica fine particles is caused. Therefore, the ionic surfactant is avoided from using together with silica fine particles. However, according to the invention, surprisingly, it was found that, if this ionic surfactant is added to a water-based anti-soiling agent, it is possible to increase the anti-soiling properties of the anti-soiling coating layer. In this manner, according to the invention, anti-soiling properties and the ability to be cleaned by washing with water was successfully increased by adding an ionic surfactant.

According to the invention, the content of the component indicating the ionic surface activity is preferably 1.0% by mass or less, more preferably 0.8% by mass or less, and still more preferably 0.5% by mass or less with respect to the total mass of the water-based anti-soiling agent. If the content of the component exhibiting ionic surface activity is in the range described above, anti-soiling properties of the anti-soiling coating layer can be increased while the condensation of the silica fine particles is prevented.

The metal oxide fine particles used as the antistatic agent are not particularly limited, but examples thereof include tin oxide fine particles, antimony-doped tin oxide fine particles, tin-doped indium oxide fine particles, and zinc oxide fine particles. In addition, the metal oxide fine particles which are different from each other in sizes, shapes, and materials may be used in a mixed manner. In addition, if oxide particles have a great refractive index and a large particle diameter, loss caused by excessive scattering of transmitted light is generated, and thus a primary particle diameter is preferably 100 nm or less, more preferably 50 nm or less, and still more preferably 30 nm or less. In addition, the shape of the particles is not particularly limited, and may be a spherical shape, a plate shape, or a needle shape.

The primary particle diameter of the metal oxide fine particles may be calculated from a picture obtained by observing the dispersed particles with a transmission electron microscope. The projected area of the particles is calculated, and an equivalent circle diameter is calculated as an average particle diameter (average primary particle diameter). The average particle diameter in the specification can be calculated by measuring a projected area for 300 or more particles and calculating an equivalent circle diameter.

In addition, if the shape of the metal oxide fine particles is not a spherical shape, the average particle diameter can be calculated, for example, by using a dynamic light scattering method.

According to the invention, the content of the metal oxide fine particles is preferably 70% by mass or less, more preferably 60% by mass or less, and still more preferably 50% by mass or less with respect to the total solid content mass of the water-based anti-soiling agent. If the content of the metal oxide fine particles is in the range described above, it is possible to effectively provide antistatic properties without deteriorating film forming properties of the coating agent.

Meanwhile, the content of the metal oxide fine particles is preferably 30% by mass or less, more preferably 20% by mass or less, and still more preferably 10% by mass or less with respect to the total mass of the water-based anti-soiling agent. If the ratio of the metal oxide fine particles is in the range described above, it is possible to increase dispersion properties of the metal oxide fine particles in the water-based anti-soiling agent. Therefore, it is possible to provide antistatic properties without generating disadvantages such as condensation of the metal oxide fine particles.

### (Silica fine particles)

The water-based anti-soiling agent according to the invention may have silica fine particles. The silica fine particles has a function of increasing physical resistance of the anti-soiling coating layer formed by coating the water-based anti-soiling agent and further exhibiting hydrophilic properties. That is, the silica fine particles contribute further hydrophilic properties by a hydroxyl group on the surface thereof, together with achieving the function as hard filler. The shape of the silica fine particles that can be used in the invention is not particularly limited, and examples thereof include a spherical shape, a plate shape, a needle shape, and a necklace shape.

In addition, if the particle diameter of the added silica fine particles is in a certain degree or greater, the transmitted light is scattered in some cases, and thus the primary particle diameter of the silica fine particles is preferably 100 nm or less, more preferably 50 nm or less, and still more preferably 30 nm or less. In addition, the silica fine particles which are different to each other in sizes and shapes may be used in a mixed manner.

The primary particle diameter of the silica fine particles can be calculated in the same measuring method as the primary particle diameter of the metal oxide fine particles described above.

The content of the silica fine particles is preferably 5% by mass to 95% by mass, more preferably 10% by mass to 90% by mass, and still more preferably 20% by mass to 80% by mass with respect to the total solid content mass of the water-based anti-soiling agent. If the ratio of the silica fine particles is in the range described above, it is possible to form an anti-soiling coating layer having hydrophilic properties together with high solidity, excellent scratch resistance, and excellent shock resistance.

Meanwhile, the content of the silica fine particles is preferably 30% by mass or less, more preferably 20% by mass or less, and still more preferably 10% by mass or less with respect to the total mass of the water-based anti-soiling agent. If the ratio of the silica fine particles is in the range described above, it is possible to increase dispersibility of the silica fine particles in the water-based anti-soiling agent, and it is possible to form the anti-soiling coating layer described above, without generating disadvantages such as condensation of the metal oxide fine particles.

### (Component exhibiting surface activity)

The water-based anti-soiling agent according to the invention includes a component exhibiting surface activity. According to the invention, the component exhibiting surface activity may not be a surface active component derived from an antistatic agent. In addition, if the antistatic agent does not have a surface active component, it is preferable that a surfactant is contained. That is, according to the invention, the component exhibiting surface activity includes at least one of a surface active component derived from an antistatic agent and a surface active component derived from a surfactant.

If this surface active component is contained, it is possible to enhance the coating properties of the water-based anti-soiling agent. In addition, the surface tension of the coating agent is decreased due to the existence of the coating agent, and thus even coating becomes possible. For this purpose, all of a nonionic surfactant, an ionic (anionic, cationic, amphoteric) surfactant, and the like can be suitably used. In addition, if an ionic surfactant can be used as the antistatic agent described above, an ionic surfactant added as the antistatic agent may work for wettability enhancement.

However, if an ionic surfactant is excessively added, the amount of the electroyte amount in a system is increased, so as to cause the condensation of silica fine particles. Therefore, if an ionic surfactant is used as an antistatic agent, it is preferable to further include nonionic component exhibiting surface activity. In addition, the nonionic component exhibiting surface activity does not need to be used together with an ionic surfactant, and a nonionic component exhibiting surface activity may be singly used as a surface active component.

Examples of the nonionic surfactant include polyalkylene glycol monoalkyl ethers, polyalkylene glycol monoalkyl esters, and polyalkylene glycol monoalkyl ester-monoalkyl ethers. Specifically, examples thereof include polyethylene glycol monolauryl ether, polyethylene glycol monostearyl ether, polyethylene glycol monocetyl ether, polyethylene glycol monolauryl ester, and polyethylene glycol monostearyl ester.

As the ionic surfactant, the compounds exemplified in the section of the antistatic agent can be appropriately used.

According to the invention, 0.01% by mass or greater of the component exhibiting surface activity may be included, 0.02% by mass or greater thereof is preferably included, and 0.03% by mass or greater is more preferably included with respect to the total mass of the water-based anti-soiling agent. If the surface active component is contained in the range described above, it is possible to increase wettability, so as to enhance coating properties of the water-based anti-soiling agent. Meanwhile, if the surface active component is excessively added, after the coating agent is coated, the surface active component may be segregated so as to deteriorate the hardness of the film. Accordingly, the amount of the surface active component is preferably 10% or less, more preferably 8% or less, and still more preferably 5% or less with respect to the total solid content mass of the water-based anti-soiling agent.

### (Catalyst)

The water-based anti-soiling agent according to the invention preferably further includes a catalyst that promotes the condensation of the siloxane oligomer. If this catalyst is used, it is possible to form an anti-soiling coating layer having excellent durability. In addition, according to the invention, the water-based anti-soiling agent is dried after coating, and moisture is removed, such that a hydroxyl group (at least a portion thereof) included in the hydrolysate of the siloxane oligomer is condensed to each other, a bond is formed, and thus a stable coating film (anti-soiling coating layer) is formed. At this point, it is possible to more promptly advance the formation of the anti-soiling coating layer by including a catalyst promoting the condensation of the siloxane oligomer.

The catalyst that promotes the condensation of the siloxane oligomer that can be used in the invention is not particularly limited, but examples thereof include an acid catalyst, an alkali catalyst, and an organic metal catalyst. Examples of the acid catalyst include a nitric acid, a hydrochloric acid, a sulfuric acid, an acetic acid, a chloroacetic acid, a formic acid, an oxalic acid, and a toluenesulfonic acid. Examples of the alkali catalyst include sodium hydroxide, potassium hydroxide, and tetramethylammonium hydroxide. Examples of the organic metal catalyst include an aluminum chelate compound such as aluminum bis(ethylacetoacetate) mono(acetylacetonate), aluminum tris(acetylacetonate), and aluminum ethylacetoacetate diisopropylate, a zirconium chelate compound such as zirconium tetrakis(acetylacetonate), and zirconium bis(butoxy) bis(acetylacetonate), a titanium chelate compound such as titanium tetrakis(acetylacetonate), and titanium bis(butoxy) bis(acetylacetonate), and an organotin compound such as dibutyltin diacetate, dibutyltin dilaurate, and dibutyltin dioctiate. The type of the catalyst is not particularly limited, but an organic metal catalyst is preferable, an aluminum chelate compound or a zirconium chelate compound is particularly preferable.

The content of the catalyst that promotes the condensation of the siloxane oligomer is preferably 0.1% by mass to 20% by mass, more preferably 0.2 % by mass to 15% by mass, and still more preferably 0.3 % by mass to 10% by mass with respect to the total solid content mass of the water-based anti-soiling agent. If the content of the catalyst is in the range described above, an anti-soiling coating layer having appropriate solidity and appropriate durability can be formed. In addition, it is possible to proceed the forming of the anti-soiling coating layer at an appropriate speed.

In addition, the catalyst that promotes the condensation of the siloxane oligomer is useful for the hydrolyzability of the siloxane oligomer described above. Here, the hydrolyzable reaction of the alkoxy group bonded to silicon of a siloxane oligomer and the condensation reaction have an equilibrium relationship, if there is a large amount of water in the system, the reaction advances in the direction of hydrolyzation and, if there is less water, the reaction advances in the direction of condensation. The catalyst that promotes the condensation reaction of the alkoxy group promotes both reactions, and thus it is possible to promote hydrolyzable reaction in a state in which there is a large amount of water in the system. In the existence of the catalyst, it is possible to more securely advance the hydrolyzation of the siloxane oligomer under moderate conditions.

At this point, it is very efficient, if the catalyst used in the hydrolyzable reaction of the siloxane oligomer remains in the system, so as to be a component of a water-based anti-soiling agent, and is used as a catalyst for the condensation of the siloxane oligomer.

### (Other additives)

The water-based anti-soiling agent according to the invention may appropriately have an additive such as preservative, in addition to the above. Meanwhile, the water-based anti-soiling agent according to the invention does not require light irradiation or a high-temperature heat treatment at the time of forming a film after coating, and thus does not require a photopolymerization initiator or a thermo polymerization initiator corresponding thereto. Instead, considering the storage stability of the coating agent, it is rather preferable not to have a photopolymerization initiator or a thermo polymerization initiator. In this manner, according to the invention, it is possible to form an anti-soiling coating layer from a water-based anti-soiling agent in a simple method.

In addition, most of the solid content of the anti-soiling agent according to the invention is silicon and oxygen, and the carbon content is small. If the carbon content is caused to be the minimum, for example, even if the anti-soiling coating layer after coating and drying is placed in a severe environment such as a solar battery surface, the influence of light or heat is minimal. In the anti-soiling agent according to the invention, the ratio of the carbon in the total solid content is preferably 3% by mass or less, more preferably 2.5% by mass or less, and still more preferably 2% by mass or less.

In addition, according to the invention, the carbon compound included in the water-based anti-soiling agent in a minimum amount is preferably a low-molecular carbon compound. Specifically, the content of the organic compound having the molecular weight of 1,100 or greater included in the total solid content of the water-based anti-soiling agent is preferably 0.2% by mass or less, more preferably 0.1 % by mass, and still more preferably 0% by mass. Accordingly, it is possible to increase compatibility of the solid content of the water-based anti-soiling agent and increase film forming properties of the coating layer after coating and drying.

### (Preparation method of water-based anti-soiling agent)

The water-based anti-soiling agent according to the invention can be obtained by mixing a siloxane oligomer, a water component, an antistatic agent, and silica fine particles. First, the siloxane oligomer is preferably mixed with the water component, and it is preferable to obtain a hydrolysate of the siloxane oligomer. In addition, at this point, it is preferable to add a catalyst that promotes the condensation of the siloxane oligomer. In this manner, it is possible to obtain a hydrolysate solution of a siloxane oligomer.

The antistatic agent and the silica fine particles are further included in the hydrolysate solution of the siloxane oligomer. Here, it is preferable to further add a surfactant as a wettability enhancing agent. In addition, at this point, the catalyst that promotes the condensation of the siloxane oligomer may be added. In addition, a portion or all of the antistatic agent or the surfactant may be added in a step of obtaining the hydrolysate of the siloxane oligomer.

In addition, the preparation condition of the water-based anti-soiling agent is not particularly limited. However, depending on the used silica fine particles, condensation may occur due to pH or the concentration of a coexisting component. Accordingly, the silica fine particles are preferably added in the latter half of the manufacturing of the liquid, or at the end. At this point, if the dispersion liquid of the silica fine particles is used, both pH of the dispersion liquid and pH of the coating agent may be acidic or basic.

### (Forming method of anti-soiling coating layer)

The anti-soiling coating layer according to the invention can be formed by coating and drying the water-based anti-soiling agent described above. The target of coating the water-based anti-soiling agent is not particularly limited, and suitably used on surfaces of various supports such as glass, a resin, metal, and ceramics. In addition, if a glass layer is used as a base material, the condensation of the hydroxyl group on silicon is generated between hydroxyl groups of the glass surface, and thus it is possible to obtain a layered body having excellent adhesive properties. In this manner, the anti-soiling coating layer according to the invention is preferably provided, for example, on the glass surface on the light receiving surface side of the solar battery module, and is useful as an anti-soiling coating layer for a solar battery module.

The method of coating the water-based anti-soiling agent according to the invention is not particularly limited, and examples thereof include spray coating, brush coating, roller coating, bar coating, and dip coating. In the drying method after coating, drying may be performed at room temperature, or heating may be performed at 40°C to 120°C for about 1 minute to 30 minutes.

### (Physical properties of anti-soiling coating layer)

In order to cause the anti-soiling coating layer according to the invention to exhibit sufficient anti-soiling properties, it is preferable that the surface of the anti-soiling coating layer exhibits antistatic properties and hydrophilicity. Accordingly, it is possible to suppress the attachment of the contaminants, and also even if contaminants are attached to the surface of the anti-soiling coating layer, the stain has to be washed away (washed with water).

The surface electrical resistance of the anti-soiling coating layer is preferably 1 × 10¹² ω/square or less, more preferably 1 × 10¹¹ ω/square or less, and still more preferably 1 × 10¹⁰ ω/square or less. If the surface electrical resistance of the anti-soiling coating layer is caused to be in the range described above, it is possible to provide anti-soiling properties to the anti-soiling coating layer.

In addition, the water contact angle of the anti-soiling coating layer is preferably 40° or less, more preferably 30° or less, and still more preferably 25° or less. If the water contact angle of the anti-soiling coating layer is in the range described above, it is possible to provide sufficient hydrophilicity to the anti-soiling coating layer.

Further, it is preferable that the anti-soiling coating layer according to the invention has sufficient light transmitting ability. Particularly, if the anti-soiling coating layer according to the invention is used for a protection glass on the surface of the solar battery module, it is required to have high light transmittance. Therefore, the average integrating sphere transmittance in the wavelength (λ) of the anti-soiling coating layer from 300 nm to 1,200 nm is preferably 90% or greater, and more preferably 95% or greater. In addition, the integrating sphere transmittance of the anti-soiling coating layer was calculated by measuring the integrating sphere transmittance of the glass provided with the anti-soiling coating layer using an integrating sphere transmittance of glass which is not provided as an anti-soiling coating layer, as a reference. The measurement of the integrating sphere transmittance can be performed by using a transparent-type spectrophotometer with an integrating sphere. Specifically, examples thereof include an apparatus formed by connecting an integrating sphere attached apparatus (ISR-2200, Shimizu Corporation) to an ultraviolet-visible infrared spectrophotometer (UV-3600, Shimizu Corporation), an apparatus formed by connecting a multi-purpose large specimen chamber (MPC-3100, Shimizu Corporation) to an ultraviolet-visible infrared spectrophotometer (UV-3600, Shimizu Corporation).

In addition, the average transmittance in the wavelength (λ) of the anti-soiling coating layer from 300 nm to 1,200 nm is preferably 70% or greater and more preferably 80% or greater. The transmittance of the anti-soiling coating layer is calculated by measuring the integrating sphere transmittance of the glass provided with the anti-soiling coating layer in the same manner as in the integrating sphere transmittance using the integrating sphere transmittance of the glass which is not provided with the anti-soiling coating layer as a reference.

For example, the transmittance can be measured by an automatic recording spectrophotometer (UV2400-PC, manufactured by Shimizu Corporation).

### (Solar battery module)

The solar battery module according to the invention has a layered body including the anti-soiling coating layer described above. The solar battery module according to the invention is formed by disposing a solar battery element that converts the light energy of sunlight to electric energy between a transparent substrate provided on the sunlight incident side and a polyester film (the back sheet for the solar battery). A portion between the substrate and the polyester film can be sealed with, for example, a resin (so-called sealing agent) such as an ethylene-vinyl acetate copolymer.

Members other than the solar battery module, the solar battery cell, the back sheet are specifically disclosed, for example, in "Sunlight power generation system configuration material" (edited by Sugimoto Eiichi, Kogyo Chosakai Publishing Co., Ltd., issued in 2008).

Examples of the substrate provided on the sunlight incident side include a glass substrate and a transparent resin such as an acryl resin. Among these, a glass substrate is preferably used.

As the solar battery element, various kinds of well-known solar battery elements based on silicon such as monocrystalline silicon, polycrystalline silicon, and amorphous silicon, and a semiconductor of a compound in a III-V group or a II-VI group such as copper-indium-gallium-selenium, copper-indium-selenium, cadmium-tellurium, and gallium-arsenic can be applied.

### Examples

Hereinafter, characteristics of the invention are described in greater detail with reference to examples and comparative examples. Materials, usage amounts, ratios, process details, process sequences, and the like shown in the examples below can be appropriately changed without departing from the gist of the invention. Accordingly, the scope described below should not be construed in a limited extent by the examples described below.

### (Example 1)

3.06 g of an siloxane oligomer (n = 5) expressed by General Formula (1) and 0.94 g of an 1% isopropanol solution of aluminum bis(ethylacetoacetate) mono(acetylacetonate) were added to 81.07 g of ethanol and mixed. 114.80 g of water in which 0.057 g of polyethylene glycol monolauryl ether (the number of repetition of ethyleneoxide portion: 15) was dissolved and was slowly added to the obtained solution, were stirred for 12 hours or longer at room temperature, and hydrolyzability of the siloxane oligomer was advanced, so as to manufacture a coating agent mother liquid S-1.

Subsequently, 7.36 g of ethanol, 12.58 g of water, and 0.0056 g of polyethylene glycol monolauryl ether (the number of repetition of ethyleneoxide portion: 15), and 0.0011 g of di(2-ethylhexyl) sodium sulfosuccinate were added to 19.99 g of the coating agent mother liquid S-1, and were diluted. Also, 0.85 g of an 1% isopropanol solution of aluminum bis(ethylacetoacetate) mono(acetylacetonate) and 1.70 g of a 33% dispersion liquid of silica fine particles (primary particle diameter: 10 to 15 nm) were added, so to manufacture a water-based anti-soiling agent AS-1 of Example 1. A white-board glass plate was coated with the manufactured water-based anti-soiling agent by using a roller, and dried for one hour at room temperature such that an anti-soiling coating layer containing layered body was obtained. When the surface electrical resistance of the manufactured anti-soiling coating layer was measured, the surface electrical resistance was 1.7 × 10⁹ ω/square. In addition, when the integrating sphere transmittance of the manufactured anti-soiling coating layer was measured with the white-board glass used in the coating as a reference, such that an average in the wavelength of 300 nm to 1200 nm was 95% or greater.

### (Example 2)

A water-based anti-soiling agent AS-2 of Example 2 was manufactured in the same manner as in Example 1 except that the amount of di(2-ethylhexyl) sodium sulfosuccinate in Example 1 was changed from 0.0011 g to 0.011 g.

### (Example 3)

A water-based anti-soiling agent AS-3 of Example 3 was manufactured in the same manner as in Example 1 except that the amount of di(2-ethylhexyl) sodium sulfosuccinate in Example 1 was changed from 0.0011 g to 0.11 g.

### (Example 4)

A water-based anti-soiling agent AS-4 of Example 4 was manufactured in the same manner as in Example 1 except that the amount of di(2-ethylhexyl) sodium sulfosuccinate in Example 1 was changed from 0.0011 g to 1.1 g.

### (Comparative Example 1)

A water-based anti-soiling agent AS-21 of Comparative Example 1 was manufactured in the same manner as in Example 1 except that 0.0011 g of di(2-ethylhexyl) sodium sulfosuccinate in Example 1 was not added.

### (Evaluation)

A white-board glass plate was coated with the manufactured water-based anti-soiling agent using a roller. After one hour drying, hydrophilicity and stain attachment resistance of the anti-soiling coating layer were evaluated. In addition, as Reference Example 1, an evaluation result of a white-board glass plate which did not have an anti-soiling coating layer is presented in Table 1.

With respect to hydrophilicity, a contact angle of water was evaluated (40° or less was a success). With respect to the stain attachment resistance, a process of evenly sprinkling a natural yellow soil manufactured by Holbein Works, Ltd. on the anti-soiling coating layer, and dropping the natural yellow soil by beating the anti-soiling coating layer was performed 5 times, the amount of the attached stain was visually evaluated (5 steps evaluation of A to E, and B or higher was a success).
A: A yellow soil pigment was not attached on the surface of the anti-soiling coating layer, and the surface was colorless and transparent.
B: A yellow soil pigment was attached to 10% or less of the surface of the anti-soiling coating layer.
C: A yellow soil pigment was attached to 50% or less of the surface of the anti-soiling coating layer.
D: A yellow soil pigment was attached to the substantially entire surface of the anti-soiling coating layer, but transparency was maintained.
E: A yellow soil pigment was attached to the substantially entire surface of the anti-soiling coating layer, and thus at portion or all of the anti-soiling coating layer was opaque.

**[Table 1]**

| | Water-based anti-soiling agent | Siloxane oligomer | Antistatic agent | Component exhibiting surface activity | Evaluation | | |
|---|---|---|---|---|---|---|---|
| | | Number of n (in General Formula (1)) | Type | % by mass | Surface shape | Hydrophilicity (Water contact angle (°)) | Anti-soiling properties |
| Example 1 | AS-1 | 5 | (2-ethylhexyl) sodium sulfosuccinate | 0.030 | Colorless, transparent, strong, and even | 15.1 | A |
| Example 2 | AS-2 | 5 | (2-ethylhexyl) sodium sulfosuccinate | 0.053 | Colorless, transparent, strong, and even | 14.8 | A |
| Example 3 | AS-3 | 5 | (2-ethylhexyl) sodium sulfosuccinate | 0.29 | Colorless transparent, Colorless, transparent, even, and slightly soft | 10.5 | A |
| Example 4 | AS-4 | 5 | (2-ethylhexyl) sodium sulfosuccinate | 2.62 | Having particle-shaped foreign substances and soft | 36.1 | B |
| Comparative Example 1 | AS-21 | 5 | - | 0.027 | Colorless, transparent, strong, and even | 17.9 | D |
| Reference Example 1 | None | - | - | - | - | 79.6 | E |

As a result, samples manufactured by using the water-based anti-soiling agents AS-1 to 3 of the examples had colorless, transparent, hard, and even coating films, and both hydrophilicity and anti-soiling properties (stain attachment resistance) were excellent. In the water-based anti-soiling agent AS-4, a condensate considered to be derived from silica in the state of the water-based anti-soiling agent was generated, the sample manufactured by using AS-4 had included a foreign substance expected to be derived from the condensate, but the sample succeeded in hydrophilicity and anti-soiling properties. The glass manufactured by using the water-based anti-soiling agent AS-11 of Comparative Example 1 had favorable hydrophilicity but anti-soiling properties were insufficient.

### (Example 5)

A water-based anti-soiling agent AS-5 of Example 5 was manufactured in the same manner as in Example 1 except that 1.20 g of a 50% dispersion liquid of oxide tin fine particles (primary particle diameter: 15 to 25 nm) was used instead of 0.0022 g of di(2-ethylhexyl) sodium sulfosuccinate in Example 1.

### (Example 6)

A water-based anti-soiling agent AS-6 of Example 6 was manufactured in the same manner as in Example 5 except that 2.00 g of the 30% dispersion liquid of the zinc oxide·antimony oxide complex oxide fine particles (primary particle diameter: 15 to 25 nm), instead of 1.20 g of a 50% dispersion liquid of oxide tin fine particles (primary particle diameter: 15 to 25 nm) in Example 5.

### (Example 7)

A water-based anti-soiling agent AS-7 of Example 7 was manufactured in the same manner as in Example 5 except that 2.00 g of the 30% dispersion liquid of gallium-doped zinc oxide fine particles (primary particle diameter: 20 to 40 nm) were used instead of 1.20 g of a 50% dispersion liquid of the oxide tin fine particles (primary particle diameter: 15 to 25 nm) in Example 5.

### (Example 8)

A water-based anti-soiling agent AS-8 of Example 8 was manufactured in the same manner as in Example 5 except that 1.20 g of a 20% dispersion liquid of oxide tin fine particles (average primary particle diameter: 150 nm) was used instead of 1.20 g of the 50% dispersion liquid of oxide tin fine particles (primary particle diameter: 15 to 25 nm) in Example 5.

### (Evaluation)

A white-board glass plate was coated with the manufactured water-based anti-soiling agent using a roller. After one hour drying, hydrophilicity and stain attachment resistance of the sample were evaluated.

**[Table 2]**

| | Water-based anti-soiling agent | Siloxane oligomer | Antistatic agent | Component exhibiting surface activity | Evaluation | | |
|---|---|---|---|---|---|---|---|
| | | Number of n (in General Formula (1)) | Type | % by mass | Surface shape | Hydrophilicity (Water contact angle (°)) | Anti-soiling properties |
| Example 5 | AS-5 | 5 | Oxide tin fine particles | 0.027 | Colorless, transparent, strong, and even | 10.0 | A |
| Example 6 | AS-6 | 5 | Zinc oxide-antimony oxide complex oxide fine particles | 0.027 | Colorless, transparent, strong, and even | 11.2 | A |
| Example 7 | AS-7 | 5 | Gallium-doped zinc oxide fine particles | 0.027 | Colorless, transparent, strong, and even | 10.5 | A |
| Example 8 | AS-8 | 5 | Oxide tin fine particles | 0.027 | Transparent with gray color, strong, and even | 10.1 | A |

As a result, the samples manufactured by using the water-based anti-soiling agents AS-5 to 7 of examples were colorless, transparent, hard, and even coating films in the same manner as in the sample manufactured by using AS-1, and both hydrophilicity and anti-soiling properties were excellent. The sample manufactured by using the water-based anti-soiling agent AS-8 was slightly colored, but exhibited excellence in hydrophilicity and anti-soiling properties.

### (Example 9)

A water-based anti-soiling agent AS-9 of Example 9 was manufactured in the same manner as in Example 1 except that a 1% isopropanol solution of aluminum bis(ethylacetoacetate) mono(acetylacetonate) in Example 1 was not added.

### (Example 10)

A water-based anti-soiling agent AS-10 of Example 10 was manufactured in the same manner as in Example 1 except that the amount of the polyethylene glycol monolauryl ether (the number of repetition of the ethyleneoxide portion: 15) which is additionally added to the coating agent mother liquid in Example 1 was changed from 0.0056 g to 0.11 g.

### (Example 11)

A water-based anti-soiling agent AS-11 of Example 11 was manufactured in the same manner as in Example 1 except that 0.11 g of Stearate polyoxyethylene stearyl ether (the number of repetition of ethyleneoxide portion: 15, and molecular weight: 1210) was used instead of 0.0056 g of the polyethylene glycol monolauryl ether (the number of repetition of the ethyleneoxide portion: 15, molecular weight: 848) which was additionally added to the coating agent mother liquid in Example 1.

### (Evaluation)

A white-board glass plate was coated with the manufactured water-based anti-soiling agent by using a roller. After one hour drying, hydrophilicity and stain attachment resistance of the sample were evaluated.

**[Table 3]**

| | Water-based anti-soiling agent | Siloxane oligomer | Antistatic agent | Component exhibiting surface activity | Evaluation | | |
|---|---|---|---|---|---|---|---|
| | | Number of n (in General Formula (1)) | Type | % by mass | Surface shape | Hydrophilicity (Water contact angle (°)) | Anti-soiling properties |
| Example 9 | AS-9 | 5 | (2-ethylhexyl) sodium sulfosuccinate | 0.030 | Colorless, transparent, even, and slightly soft | 14.8 | B |
| Example 10 | AS-10 | 5 | (2-ethylhexyl) sodium sulfosuccinate | 0.275 | Colorless, transparent, even, and slightly soft | 13.2 | B |
| Example 11 | AS-11 | 5 | (2-ethylhexyl) sodium sulfosuccinate | 0.275 | Colorless, transparent, even, and slightly soft | 34.8 | B |

As a result, the sample manufactured by using the water-based anti-soiling agent AS-9 to 11 of the examples had colorless and transparent coating films having slightly deteriorated hardness compared with the sample manufactured by using AS-1, and both hydrophilicity and stain attachment resistance were excellent.

### Industrial applicability

If the water-based anti-soiling agent according to the invention is used, it is possible to form an anti-soiling coating layer having both excellent ability to be cleaned by washing with water and excellent anti-soiling properties. The anti-soiling coating layer that can be obtained in this manner is preferably used as surfaces of various types of base materials, and particularly as an anti-soiling layer of a surface protecting material of a solar battery module. Therefore, industrial applicability is high.

## Claims

1. A water-based anti-soiling agent comprising, in a mixed manner:
a siloxane oligomer expressed by General Formula (1) below;
a water component;
an antistatic agent; and
silica fine particles,
wherein a component exhibiting surface activity is 0.01% by mass or greater is included in the water-based anti-soiling agent, and 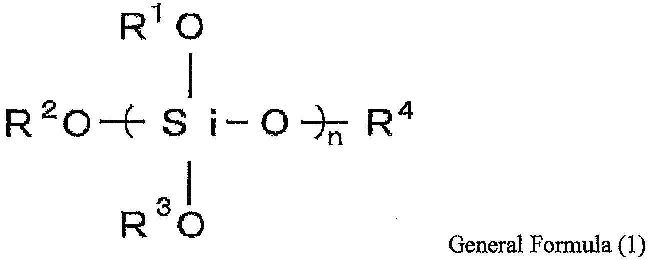
wherein, in General Formula (1), each of R¹ to R⁴ independently represents an organic group having 1 to 6 carbon atoms, and n represents an integer of 2 to 20.

2. The water-based anti-soiling agent according to claim 1, further comprising:
a catalyst that promotes condensation of a siloxane oligomer.

3. The water-based anti-soiling agent according to claim 1 or 2, further comprising:
a component exhibiting ionic surface activity.

4. The water-based anti-soiling agent according to any one of claims 1 to 3, further comprising:
a component exhibiting nonionic surface activity.

5. The water-based anti-soiling agent according to claim 3 or 4,
wherein a content of the component exhibiting ionic surface activity is 1.0% by mass or less with respect to a total mass of the water-based anti-soiling agent.

6. The water-based anti-soiling agent according to any one of claims 1 to 5, wherein the antistatic agent includes metal oxide fine particles.

7. The water-based anti-soiling agent according to any one of claims 1 to 6, wherein a ratio of carbon in a total solid content in the water-based anti-soiling agent is 3% by mass or less.

8. The water-based anti-soiling agent according to claim 6 or 7,
wherein a primary particle diameter of metal oxide fine particles is 100 nm or less.

9. The water-based anti-soiling agent according to any one of claims 1 to 8, wherein a content of an organic compound having a molecular weight of 1,100 or greater included in the water-based anti-soiling agent is 0.2% by mass or less.

10. An anti-soiling coating layer that is formed by coating and drying the water-based anti-soiling agent according to any one of claims 1 to 9.

11. The anti-soiling coating layer according to claim 10,
wherein a surface electrical resistance is 1 × 10¹² ω/square or less.

12. The anti-soiling coating layer according to 10 or 11,
wherein a water contact angle on a surface is 40° or less.

13. The anti-soiling coating layer according to any one of claims 10 to 12, wherein an average integrating sphere transmittance in a wavelength of 300 nm to 1,200 nm is 95% or greater.

14. A layered body obtained by laminating the anti-soiling coating layer according to any one of claims 10 to 13, as a glass layer.

15. A solar battery module having a layered body according to claim 14.
